# EUROPÄISCHE PATENTSCHRIFT

(11) **EP 3 917 818 B1**
(45) Veröffentlichungstag und Bekanntmachung des Hinweises auf die Patenterteilung: **19.08.2026**
(21) Anmeldenummer: 20713183.0
(22) Anmeldetag: 05.03.2020
(51) Int. Cl.: B60Q 3/44, B61D 29/00, B61D 33/00, B60Q 3/43, B60Q 3/47

(54) **VERFAHREN ZUM INDIVIDUELLEN ANSTEUERN EINES LICHTBANDS EINES PASSAGIERVERKEHRSMITTELS UND PASSAGIERVERKEHRSMITTEL**
METHOD FOR INDIVIDUALLY ACTUATING A LIGHT BAND OF A PASSENGER TRANSPORTATION MEANS AND PASSENGER TRANSPORTATION MEANS
PROCÉDÉ DE COMMANDE INDIVIDUELLE D'UNE BANDE LUMINEUSE D'UN MOYEN DE TRANSPORT DE PASSAGERS ET MOYEN DE TRANSPORT DE PASSAGERS

(30) Priorität: 02.04.2019 DE 102019204666
(43) Veröffentlichungstag der Anmeldung: 08.12.2021
(73) Patentinhaber: Siemens Mobility GmbH, 80997 München (DE)
(72) Erfinder: PAFFRATH, Klaus, 47906 Kempen (DE)
(74) Vertreter: Siemens Patent Attorneys
(86) Internationale Anmeldenummer: PCT/EP2020/055893
(87) Internationale Veröffentlichungsnummer: WO 2020/200636

(56) Entgegenhaltungen:
- WO-A1-2011/082998
- WO-A1-2020/011462
- DE-A1- 102007 004 829
- US-A1- 2015 257 224
- US-A1- 2017 073 074

## Beschreibung

Die Erfindung betrifft ein Verfahren zum individuellen Ansteuern eines Lichtbands eines Passagierverkehrsmittels, wobei das Passagierverkehrsmittel zumindest eine Sitzreihe mit mehreren Sitzplätzen aufweist, und wobei das Lichtband dazu eingerichtet ist, die Sitzplätze zu beleuchten.

Ein solches Verfahren ist aus der US 2015/257224 Al bekannt. Danach ist ein zu Beleuchtungszwecken vorgesehenes Lichtband in einzeln ansteuerbare Abschnitte aufgeteilt. Die DE102007004829A1 offenbart ein Beleuchtungssystem sowie ein dazugehöriges Verfahren wobei eine leichte Rekonfigurierung einer Kabinenbeleuchtung ermöglicht wird.

Bei einigen Passagierverkehrsmitteln, besonders bei Schienenfahrzeugen, besteht die Möglichkeit, das Sitzlayout zu verändern. Beispielsweise können Sitze aus dem Passagierverkehrsmittel entfernt oder in das Passagierverkehrsmittel eingefügt werden, Sitze können verschoben werden und/oder Sitzausrichtungen können verändert werden. Um verschiebbare Sitze bereitzustellen, können die Sitze beispielsweise auf Schienen montiert werden.

Jeder Sitz stellt einem Passagier einen Sitzplatz zur Verfügung.

In der Regel erfolgt eine Beleuchtung der Sitzplätze durch im Deckenbereich fest verbaute, gerichtete Lichtquellen, auch Lichtspots genannt. Diese lassen sich jedoch nicht an ein verändertes Sitzlayout anpassen.

Um die Sitzplatzbeleuchtung an ein geändertes Sitzplatzlayout anpassen zu können, ist es beispielsweise denkbar, die Lichtspots - ähnlich wie auch die Sitze - auf Schienen zu montieren, sodass sie verschoben werden können. In diesem Fall muss jedoch eine günstige Verkabelungslösung gefunden werden.

Das Dokument WO 2020/011462 A1 offenbart ein gattungsgemäßes Verfahren.

Eine Aufgabe der Erfindung ist es, ein Verfahren zur individuellen Sitzplatzbeleuchtung anzugeben.

Die Erfindung ist ein Verfahren gemäß dem Anspruch 1 sowie ein Passagierverkehrsmittel gemäß dem Anspruch 5.

Das heißt, dass vorzugsweise zumindest ein Teil derjenigen Lichtquellen des Lichtbands, die in dem ausgewählten Abschnitt angeordnet sind, geschaltet wird.

Mit dem erfindungsgemäßen Verfahren kann der Abschnitt des Lichtbands individuell, insbesondere abhängig von einem Sitzlayout, ausgewählt werden. Weiter kann genau der ausgewählte Abschnitt angesteuert werden. Auf diese Weise kann zumindest ein Teil derjenigen Lichtquellen des Lichtbands, die genau in dem ausgewählten Abschnitt angeordnet sind, geschaltet werden.

Die Lichtquellen des Lichtbands, die in dem ausgewählten Abschnitt angeordnet sind, werden im Folgenden auch kurz als "Lichtquellen in dem ausgewählten Abschnitt" bezeichnet. Zweckmäßigerweise werden nicht ausgewählte Abschnitte des Lichtbands nicht angesteuert. Auf diese Weise bleibt der jeweilige Schaltzustand der Lichtquellen in den nicht ausgewählten Abschnitten zweckmäßigerweise unverändert.

In dem Bereich eines der Sitzplätze können auch mehrere Abschnitte des Lichtbands ausgewählt werden. Das heißt, dass neben dem erstgenannten Abschnitt noch zumindest ein weiterer Abschnitt des Lichtbands ausgewählt werden kann. In diesem Fall wird vorzugsweise der Schaltzustand von zumindest einem Teil derjenigen Lichtquellen des Lichtbands, die in den ausgewählten Abschnitten angeordnet sind, verändert.

Als Passagierverkehrsmittel kann ein Verkehrsmittel aufgefasst werden, welches zur Beförderung von Passagieren eingerichtet ist. Ein Passagierverkehrsmittel kann beispielsweise ein Schienenfahrzeug, ein Bus, ein Flugzeug, ein Schiff o. Ä. sein.

Als Sitzreihe kann eine Reihe von Sitzen aufgefasst werden. Die Sitze können in der Reihe beispielsweise nebeneinander oder hintereinander angeordnet sein. Die Ausrichtung der Sitze relativ zum Passagierverkehrsmittel kann beliebig sein.

Jeder Sitz stellt zweckmäßigerweise jeweils einen Sitzplatz - beispielsweise für einen Benutzer, insbesondere für einen Passagier - zur Verfügung.

Die Auswahl des Abschnitts des Lichtbands und die Änderung des Schaltzustands von zumindest einem Teil der in dem ausgewählten Abschnitt angeordneten Lichtquellen können mittels eines Auswahl-Schalt-Mittels erfolgen. Das Auswahl-Schalt-Mittel kann ein zu dem Schaltmittel separates Änderungsmittel umfassen. Vorteilhafterweise ist das Schaltmittel mit dem Änderungsmittel identisch.

Es ist vorteilhaft, wenn der Schaltzustand durch manuelle Einwirkung im jeweiligen Sitzplatzbereich verändert wird. Das heißt, dass vorzugsweise der Schaltzustand von zumindest einem Teil derjenigen Lichtquellen des Lichtbands, die in dem ausgewählten Abschnitt angeordnet sind, durch manuelle Einwirkung im jeweiligen Sitzplatzbereich verändert wird. Beispielsweise kann der Schaltzustand durch manuelle Einwirkung eines Benutzers im jeweiligen Sitzplatzbereich verändert werden.

Der Bereich eines Sitzplatzes, auch Sitzplatzbereich, umfasst vorzugsweise einen jeweiligen Sitzplatz und einen Bereich um den jeweiligen Sitzplatz.

Der Sitzplatzbereich kann beispielsweise zumindest im Wesentlichen zylinderförmig sein. Ein zylinderförmiger Bereich kann beispielsweise einen Radius von 1 m aufweisen. Der Sitzplatzbereich kann weiter beispielsweise zumindest im Wesentlichen quaderförmig sein. Ein quaderförmiger Bereich kann beispielsweise eine Grundfläche von 1 m mal 1 m haben. Auch andere Formen sind denkbar.

Ferner ist es bevorzugt, wenn sich der Sitzplatzbereich von einem Fußboden des Passagierverkehrsmittels bis zu einer Decke des Passagierverkehrsmittels erstreckt.

Auf diese Weise kann beispielsweise ein Benutzer, insbesondere ein Passagier, auf oder an einem Sitzplatz die jeweilige Sitzplatzbeleuchtung durch manuelle Einwirkung im jeweiligen Sitzplatzbereich ändern.

Es ist bevorzugt, wenn der Schaltzustand zumindest eines Teils der Lichtquellen in dem ausgewählten Abschnitt des Lichtbands bei der Auswahl des Abschnitts verändert wird.

Insbesondere kann in dem Sitzplatzbereich der Abschnitt des Lichtbands durch manuelle Einwirkung in diesem Sitzplatzbereich ausgewählt werden, wobei der Schaltzustand zumindest eines Teils der Lichtquellen in dem ausgewählten Abschnitt verändert wird.

Erfindungsgemäß wird der Abschnitt des Lichtbands unter Verwendung zumindest eines Sensors ausgewählt.

Der zumindest eine Sensor ist erfindungsgemäß ein Bewegungssensor, auch Bewegungsmelder genannt.

Der Bewegungssensor erkennt, wenn sich ein Körperteil eines Benutzers, insbesondere eines Passagiers, dem Lichtband nähert. Zweckmäßigerweise wird bei der Erkennung derjenige Abschnitt, in dem sich das Körperteil dem Lichtband auf vorgegebene Weise, beispielsweise näher als ein vorgegebener Abstand, nähert, ausgewählt.

Zweckmäßigerweise ist der Bewegungssensor in unmittelbarer Nähe zu dem Lichtband angeordnet.

Das Körperteil kann beispielsweise eine Hand, ein Arm oder ein anderes Körperteil sein.

Vorzugsweise wird der Schaltzustand zumindest eines Teils der Lichtquellen in dem ausgewählten Abschnitt bei der Auswahl des Abschnitts mittels des Bewegungsmelders verändert.

Auf diese Weise kann der Bewegungssensor gleichzeitig als Auswahlmittel und als Schaltmittel verwendet werden. Das heißt, dass das zuvor genannte Auswahl-Schalt-Mittel den Bewegungssensor aufweisen kann.

Insbesondere kann das zuvor genannte Auswahl-Schalt-Mittel als ein oder mehrere Bewegungssensor(en) ausgeführt sein.

Prinzipiell kann der Schaltzustand zumindest eines Teils der Lichtquellen in dem ausgewählten Abschnitt auch separat, beispielsweise mittels eines zu dem Bewegungssensor separaten Schalters, zu der Auswahl des Abschnitts mittels des Bewegungsmelders verändert werden.

In einer vorteilhaften Ausgestaltung der Erfindung ist jeder Position eines jeweiligen Sitzes ein Abschnitt des Lichtbands zugeordnet.

Beispielsweise kann zur Zuordnung ein Sensor, insbesondere ein Sitzpositionserkennungssensor, vorgesehen sein.

Vorzugsweise erkennt ein Sitzpositionserkennungssensor des Passagierverkehrsmittels, insbesondere der zuvor genannte Sitzpositionserkennungssensor, die Position zumindest eines der Sitze, wobei jeder Position eines jeweiligen Sitzes ein Abschnitt des Lichtbands zugeordnet ist.

Der Sitzpositionserkennungssensor kann z. B. ein Sensor einer Kontaktleiste, ein Funksensor o. Ä. sein.

Bei einer Änderung des Sitzlayouts kann eine veränderte Sitzposition mittels des Sitzpositionserkennungssensors erkannt werden. Ferner kann der veränderten Sitzposition automatisch ein anderer Abschnitt zugeordnet werden.

Weiter kann die Zuordnung unter Verwendung einer Verkehrsmittelsteuerung des Passagierverkehrsmittels, insbesondere in einer Fahrzeugsteuerung des Passagierverkehrsmittels, erfolgen.

Vorzugsweise ist in einer Verkehrsmittelsteuerung des Passagierverkehrsmittels, insbesondere in der zuvor genannten Verkehrsmittelsteuerung des Passagierverkehrsmittels, jeder Position eines jeweiligen Sitzes jeweils ein Abschnitt des Lichtbands zugeordnet.

Bei einer Änderung des Sitzlayouts kann die Zuordnung mittels Umprogrammierung der Verkehrsmittelsteuerung geändert werden.

Zweckmäßigerweise ist jedem Sitzplatz ein manuell betätigbarer Schalter zugeordnet. Vorzugsweise ist der Schalter in dem jeweiligen Sitzplatzbereich angeordnet.

Der dem jeweiligen Sitz, insbesondere dessen Position, zugeordnete Abschnitt des Lichtbands wird vorzugsweise mittels manueller Betätigung des jeweiligen Schalters ausgewählt, wobei vorteilhafterweise der Schaltzustand zumindest eines Teils der Lichtquellen in dem ausgewählten Abschnitt verändert wird. Das heißt, dass der Schaltzustand bei der Auswahl mittels manueller Betätigung des jeweiligen Schalters verändert wird.

Auf diese Weise kann derjenige Abschnitt des Lichtbands, welcher der Position des Sitzes zugeordnet ist, angesteuert werden. Insbesondere kann auf diese Weise der Schaltzustand von einem Teil der Lichtquellen in dem der Position des Sitzes zugeordneten Abschnitt verändert werden.

Auf diese Weise kann der Schalter gleichzeitig als Auswahlmittel und als Schaltmittel verwendet werden.

Insbesondere kann das zuvor genannte Auswahl-Schalt-Mittel den manuell betätigbaren Schalter aufweisen. Insbesondere kann das zuvor genannte Auswahl-Schalt-Mittel als ein oder mehrere manuell betätigbare(r) Schalter ausgeführt sein.

Prinzipiell kann das Passagierverkehrsmittel mehrere Lichtbänder aufweisen, die dazu eingerichtet sind, in einer Sitzreihe angeordnete Sitzplätze des Passagierverkehrsmittels zu beleuchten.

In einem Bereich eines der Sitzplätze kann für jedes Lichtband jeweils ein Abschnitt des jeweiligen Lichtbands ausgewählt werden und der Schaltzustand von zumindest einem Teil derjenigen Lichtquellen der Lichtbänder, die in den ausgewählten Abschnitten angeordnet sind, verändert werden.

Mit anderen Worten: In einem Bereich eines der Sitzplätze kann für die mehreren Lichtbänder ein Abschnitt der Lichtbänder ausgewählt werden und der Schaltzustand von zumindest einem Teil derjenigen Lichtquellen der Lichtbänder, die in dem ausgewählten Abschnitt angeordnet sind, verändert werden.

Das Verfahren kann für weitere Sitzplatzbereiche wiederholt werden.

Es ist möglich, dass in mehreren Sitzplatzbereichen jeweils ein Abschnitt (oder mehrere Abschnitte) eines Lichtbands ausgewählt wird (werden) und der Schaltzustand von zumindest einem Teil in dem ausgewählten Abschnitten angeordneten Lichtquellen verändert wird.

Ferner ist die Erfindung gerichtet auf ein Passagierverkehrsmittel umfassend zumindest ein Lichtband und in einer Sitzreihe angeordnete Sitzplätze, wobei das Lichtband dazu eingerichtet ist, die Sitzplätze zu beleuchten.

Das erfindungsgemäße Passagierverkehrsmittel umfasst ein Auswahl-Schalt-Mittel, welches dazu eingerichtet ist, in einem Bereich eines der Sitzplätze einen Abschnitt des Lichtbands auszuwählen und den Schaltzustand von zumindest einem Teil derjenigen Lichtquellen des Lichtbands, die in dem ausgewählten Abschnitt angeordnet sind, zu verändern.

Das heißt, vorzugsweise ist das Auswahl-Schalt-Mittel dazu eingerichtet, in einem Bereich eines der Sitzplätze, d. h. in einem Sitzplatzbereich, einen Abschnitt des Lichtbands auszuwählen und zumindest einen Teil derjenigen Lichtquellen des Lichtbands, die in diesem Abschnitt angeordnet sind, zu schalten.

Auf diese Weise kann eine individuelle Sitzplatzbeleuchtung bereitgestellt werden.

Das Passagierverkehrsmittel ist zweckmäßigerweise das im Zusammenhang mit dem Verfahren beschriebene Passagierverkehrsmittel.

Das Auswahl-Schalt-Mittel kann dazu eingerichtet sein, den Schaltzustand durch manuelle Einwirkung in diesem Sitzplatzbereich zu verändern.

Vorzugsweise ist das Auswahl-Schalt-Mittel dazu eingerichtet, in dem Sitzplatzbereich den Abschnitt des Lichtbands durch manuelle Einwirkung in diesem Sitzplatzbereich auszuwählen, wobei der Schaltzustand zumindest eines Teils der Lichtquellen in dem ausgewählten Abschnitt verändert wird.

Das heißt, dass die Auswahl und die Schaltung durch ein und dasselbe Mittel, nämlich das Auswahl-Schalt-Mittel, ausgeführt werden kann. Das heißt, dass das Auswahlmittel mit dem Schaltmittel identisch sein kann.

In einer vorteilhaften Ausgestaltung der Erfindung weist das Auswahl-Schalt-Mittel mehrere Bewegungssensoren, auch Bewegungsmelder, auf.

Die Bewegungssensoren sind dazu eingerichtet, zu erkennen, wenn sich ein Körperteil eines Benutzers dem Lichtband nähert. Die Bewegungssensoren sind dazu eingerichtet, - insbesondere bei der zuvor genannten Erkennung - den Abschnitt, in dem sich das Körperteil dem Lichtband auf vorgegebene Weise nähert, auszuwählen.

Beispielsweise nähert sich ein Körperteil dem Lichtband auf vorgegebene Weise, wenn es näher als ein vorgegebener Abstand kommt und/oder wenn es in einen vorgegebenen Bereich eintritt.

In einer weiteren Ausgestaltung der Erfindung weist das Auswahl-Schalt-Mittel mehrere manuell betätigbare Schalter auf. Vorzugsweise ist jedem Sitzplatz jeweils einer der Schalter zugeordnet. Der jeweilige Schalter ist vorzugsweise jeweils in dem jeweiligen Sitzplatzbereich angeordnet.

Die Schalter sind vorzugsweise dazu eingerichtet, einen dem jeweiligen Sitz zugeordneten Abschnitt des Lichtbands mittels manueller Betätigung des jeweiligen Schalters auszuwählen. Weiter sind die Schalter vorzugsweise dazu eingerichtet, - insbesondere bei der Auswahl - den Schaltzustand zumindest eines Teils der Lichtquellen in dem ausgewählten Abschnitt zu verändern.

Zweckmäßigerweise ist das Lichtband oberhalb der Sitzplätze angeordnet.

Beispielsweise kann das Lichtband im Deckenbereich des Passagierverkehrsmittels angeordnet sein. Insbesondere kann das Lichtband an der Decke des Passagierverkehrsmittels angeordnet sein. Weiter kann das Lichtband an einer oberhalb der Sitzplätze platzierten Gepäckablage des Passagierverkehrsmittels angeordnet sein.

Ferner kann das Lichtband an einer Seitenwand des Passagierverkehrsmittels angeordnet sein.

Ferner ist es vorteilhaft, wenn das Lichtband zumindest im Wesentlichen parallel zu der Sitzreihe angeordnet ist.

Das Lichtband kann als Lichtquellen beispielsweise LEDs, OLEDs, LCD-Displayelemente und/oder elektroluminiszierende Beschichtungselemente aufweisen.

Als LED kann eine lichtemittierende Diode, vorzugsweise eine anorganische lichtemittierende Diode, aufgefasst werden. Weiter kann als OLED eine organische lichtemittierende Diode aufgefasst werden. Ferner kann als LCD-Displayelement ein Flüssigkristall-Displayelement aufgefasst werden.

Prinzipiell kann das Passagierverkehrsmittel mehrere Lichtbänder aufweisen, die dazu eingerichtet sind, in einer Sitzreihe angeordnete Sitzplätze des Passagierverkehrsmittels zu beleuchten.

Das Auswahl-Schalt-Mittel kann dazu eingerichtet sein, in einem Bereich eines Sitzplatzes für jedes Lichtband jeweils einen Abschnitt des jeweiligen Lichtbands auszuwählen und den Schaltzustand von zumindest einem Teil derjenigen Lichtquellen der Lichtbänder, die in den ausgewählten Abschnitten angeordnet sind, zu verändern.

Es zeigen:
- FIG 1: ein Querschnitt durch ein Schienenfahrzeug,
- FIG 2: ein Längsschnitt durch das Schienenfahrzeug aus FIG 1,
- FIG 3: ein Querschnitt durch ein anderes Schienenfahrzeug und
- FIG 4: ein Längsschnitt durch das Schienenfahrzeug aus FIG 3.

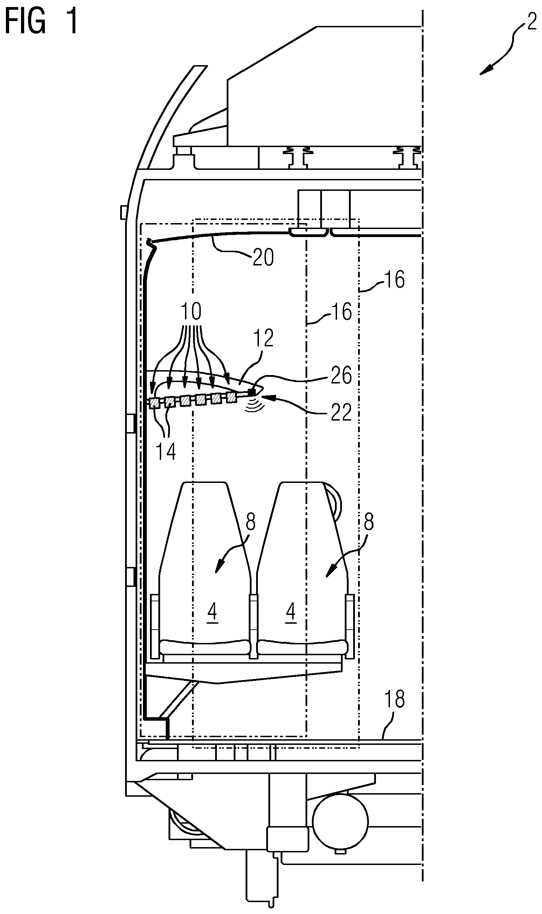

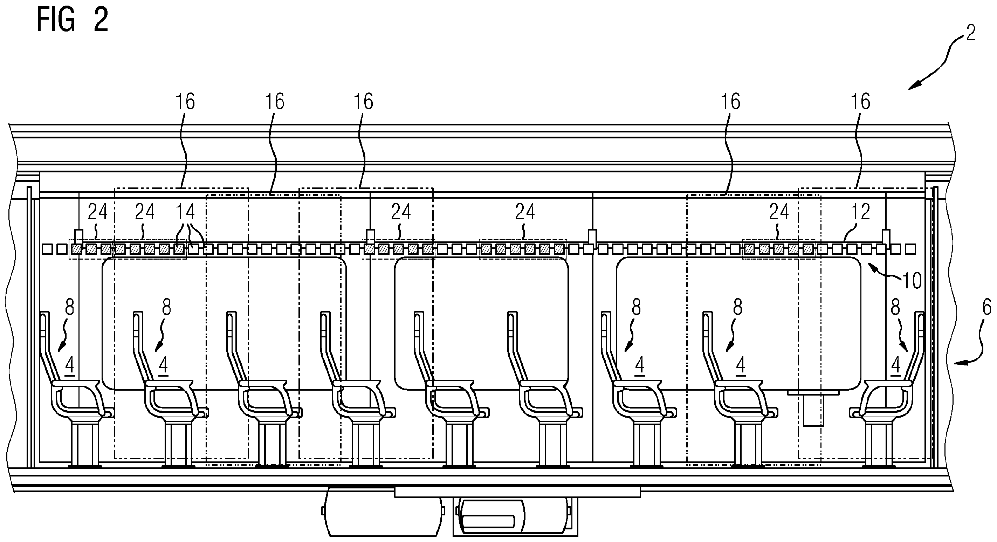

FIG 1 zeigt einen Querschnitt durch ein als Schienenfahrzeug 2 ausgebildetes Passagierverkehrsmittel. FIG 2 zeigt einen Längsschnitt durch dasselbe Schienenfahrzeug 2.

Die Erfindung kann jedoch auch in einem anders ausgebildeten Passagierverkehrsmittel verwendet werden.

Das Schienenfahrzeug 2 umfasst mehrere Sitzplätze 4, die in einer Sitzreihe 6 (vgl. FIG 2) angeordnet sind. Die Sitzreihe 6 erstreckt sich in Längsrichtung des Schienenfahrzeugs 2. Die Sitze 8 der Sitzreihe 6 sind hintereinander angeordnet.

In diesem Beispiel ist die Sitzreihe 6 als Doppelsitzreihe ausgebildet. Das heißt, es sind jeweils zwei Sitze 8 nebeneinander angeordnet.

Jeder Sitz 8 der Sitzreihe 6 stellt einen Sitzplatz 4 zur Verfügung.

Weiter umfasst das Schienenfahrzeug 2 mehrere Lichtbänder 10, die dazu eingerichtet sind, die Sitzplätze 4 zu beleuchten. Die Lichtbänder 10 sind parallel zueinander angeordnet. Außerdem erstecken sich die Lichtbänder 10 - wie die Sitzreihe 6 - in Längsrichtung des Schienenfahrzeugs 2. Damit sind die Lichtbänder 10 parallel zu der Sitzreihe 6 angeordnet.

Die Lichtbänder 10 sind oberhalb der Sitzplätze 4 angeordnet. In diesem Beispiel sind die Lichtbänder 10 an einer oberhalb der Sitzplätze 4 platzierten Gepäckablage 12 des Schienenfahrzeugs 2 angeordnet.

Jedes Lichtband 10 umfasst mehrere Lichtquellen 14. Jede der Lichtquellen 14 weist in diesem Beispiel eine LED oder mehrere miteinander verschaltete LEDs auf. Die Lichtquellen 14 können prinzipiell auch anders ausgebildet sein.

Die Größe einer jeweiligen Lichtquelle 14 kann beliebig gewählt werden. Vorzugsweise wird die Größe einer jeweiligen Lichtquelle 14 derart gewählt, dass eine sinnvolle Rasterung des Lichtbands bzw. der Lichtbänder 10 ermöglicht wird.

Jedem Sitzplatz 4 ist ein Sitzplatzbereich 16, auch Bereich 16 des jeweiligen Sitzplatzes 4 genannt, zugeordnet.

Der Bereich 16 eines Sitzplatzes 4, auch Sitzplatzbereich 16 genannt, umfasst vorzugsweise einen jeweiligen Sitzplatz 4 und einen Bereich um den jeweiligen Sitzplatz 4.

Ein jeweiliger Sitzplatzbereich 16 ist in diesem Beispiel quaderförmig. Der quaderförmige Sitzplatzbereich 16 kann beispielsweise eine Grundfläche von 1 m mal 1 m haben. Ferner erstreckt sich der Sitzplatzbereich 16 von einem Fußboden 18 des Schienenfahrzeugs 2 bis zu einer Decke 20 (auch Innendecke) des Schienenfahrzeugs 2.

Die Sitzplatzbereiche 16 benachbarter Sitzplätze 4 bzw. benachbarter Sitze 8 können teilweise überlappen, wie in FIG 1 und FIG 2 gezeigt ist.

Das Schienenfahrzeug 2 umfasst ein Auswahl-Schalt-Mittel 22 (siehe FIG 1). Das Auswahl-Schalt-Mittel 22 ist dazu eingerichtet, in einem Bereich 16 eines der Sitzplätze 4 (d. h. in einem der Sitzplatzbereiche 16) einen Abschnitt 24 der Lichtbänder 10 auszuwählen und den Schaltzustand von zumindest einem Teil derjenigen Lichtquellen 14 der Lichtbänder 10, die in dem ausgewählten Abschnitt 24 angeordnet sind, zu verändern.

In diesem Beispiel wird der Schaltzustand von allen Lichtquellen 14, die in dem ausgewählten Abschnitt 24 angeordnet sind, verändert.

Prinzipiell ist es jedoch möglich, dass einige Lichtquellen 14 in dem ausgewählten Abschnitt 24 der Lichtbänder 10 nicht unter Verwendung des Auswahl-Schalt-Mittels 22 schaltbar sind (nicht gezeigt). Beispielsweise können die nicht unter Verwendung des Auswahl-Schalt-Mittels 22 schaltbaren Lichtquellen für andere Zwecke vorgesehen sein, zum Beispiel für eine Notbeleuchtung, für eine Warnbeleuchtung, für eine Informationsanzeige o. Ä..

Das Auswahl-Schalt-Mittel 22 ist weiter dazu eingerichtet, in dem Sitzplatzbereich 16 den Abschnitt 24 der Lichtbänder 10 durch manuelle Einwirkung in diesem Sitzplatzbereich 16 auszuwählen.

Das Auswahl-Schalt-Mittel 22 ist außerdem dazu eingerichtet, den Schaltzustand der Lichtquellen 14 in dem ausgewählten Abschnitt 24 bei der Auswahl des Abschnitts 24 zu verändern.

In diesem Ausführungsbeispiel weist das Auswahl-Schalt-Mittel 22 mehrere Bewegungssensoren 26 auf.

Die Bewegungssensoren 26 sind in unmittelbarer Nähe zu den Lichtbändern 10 angeordnet. Vorzugsweise beträgt der Abstand zwischen den Bewegungssensoren 26 und dem den Bewegungssensoren nächsten Lichtband 10 maximal 10 cm.

Die Bewegungssensoren 26 sind in eine Reihe parallel zu den Lichtbändern 10 angeordnet.

Beispielsweise kann jedem Bewegungssensor 26 eine Lichtquelle 14 des zu dem jeweiligen Bewegungssensor 26 nächsten Lichtband 10 sowie die parallel zu dieser Lichtquelle 14 angeordneten Lichtquellen 14 der anderen Lichtbänder 10 zugeordnet sein. Weiter ist es möglich, dass jedem Bewegungssensor 26 mehrere Lichtquellen 14 eines jeweiligen Lichtbands 10 zugeordnet sind.

Der Abschnitt 24 der Lichtbänder 10 wird unter Verwendung zumindest eines der Bewegungssensoren 26 ausgewählt.

Jeder der Bewegungssensoren 26 erkennt, wenn sich ein Körperteil eines Benutzers, insbesondere eines Passagiers, dem Lichtband 10 nähert. Wenn einer oder mehrere der Bewegungssensoren 26 erkennt, dass sich ein Körperteil eines Benutzers dem Lichtband 10 nähert, wird derjenige Abschnitt 24 des Lichtbands 10, in dem sich das Körperteil dem Lichtband 10 auf vorgegebene Weise nähert, ausgewählt.

Beispielsweise wird ein Abschnitt 24 des Lichtbands 10 ausgewählt, wenn sich das Körperteil den innerhalb des Abschnitts 24 angeordneten Bewegungssensoren 26 näher als einen vorgegebenen Abstand nähert.

Der Schaltzustand der Lichtquellen 14 in dem ausgewählten Abschnitt 24 wird bei der Auswahl des Abschnitts 24 mittels des/der Bewegungssensor(s)/en 26 verändert.

Auf diese Weise werden die Bewegungssensoren 26 gleichzeitig als Auswahlmittel und als Schaltmittel verwendet.

Das heißt, wenn die Lichtquellen 14 innerhalb des ausgewählten Abschnitts 24 bei dessen Auswahl ausgeschaltet sind, werden sie eingeschaltet. Wenn die Lichtquellen 14 innerhalb des ausgewählten Abschnitts 24 bei dessen Auswahl eingeschaltet sind, werden sie ausgeschaltet.

Die Schaltzustände können also - wie in diesem Ausführungsbeispiel - "Eingeschaltet" und "Ausgeschaltet" sein.

Prinzipiell könnten die Schaltzustände auch "hohe Lichtleistung" und "niedrige Lichtleistung" sein. Weiter ist es möglich, dass mehr als zwei Schaltzustände zur Verfügung stehen.

Ferner ist es möglich, dass die Lichtquellen 14 innerhalb des ausgewählten Abschnitts 24 bei dessen Auswahl verschiedene Schaltzustände aufweisen. Bei der Auswahl kann beispielsweise der Schaltzustand aller Lichtquellen 14 innerhalb des Abschnitts 24 - unabhängig von deren bisherigen Schaltzustand - verändert werden. Weiter kann bei der Auswahl beispielsweise nur der Schaltzustand derjenigen Lichtquellen 14 innerhalb des Abschnitts 24 verändert werden, deren bisheriger Schaltzustand in der Überzahl ist/war.

Weitere Abwandlungen sind möglich.

In FIG 1 und FIG 2 wurde davon ausgegangen, dass ursprünglich alle Lichtquellen 14 der Lichtbänder 10 ausgeschaltet waren (z. B. bei Inbetriebnahme des Schienenfahrzeugs 2). Ausgeschaltete Lichtquellen 14 sind als leere Rechtecke, d. h. als Rechtecke ohne Schraffur, dargestellt.

In mehreren Sitzplatzbereichen 16 wurden dann - auf die oben genannte Art und Weise - Abschnitte 24 der Lichtbänder 10 ausgewählt und die in den Abschnitten 24 angeordneten Lichtquellen 14 bei der Auswahl eingeschaltet.

Eingeschaltete Lichtquellen 14 sind als schraffierte Rechtecke dargestellt.

Auf diese Weise kann eine individuelle Sitzplatzbeleuchtung erreicht werden.

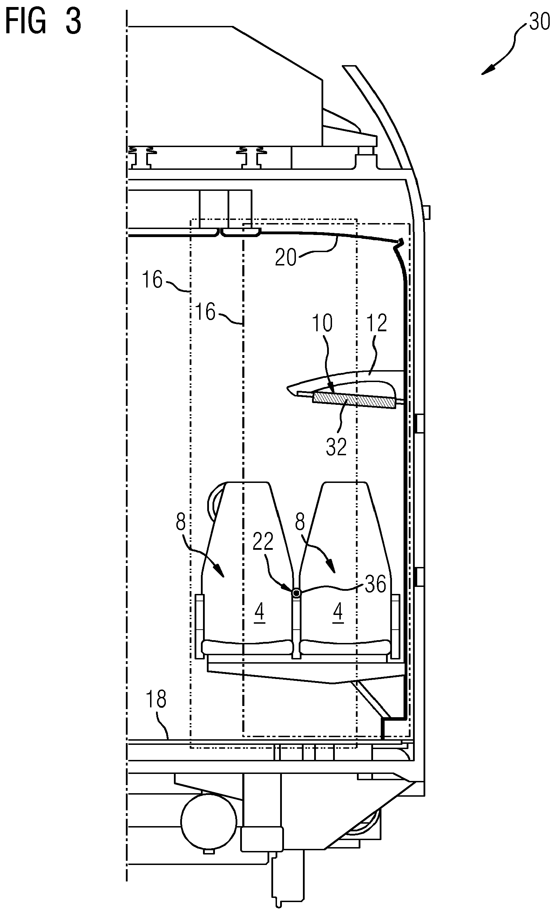

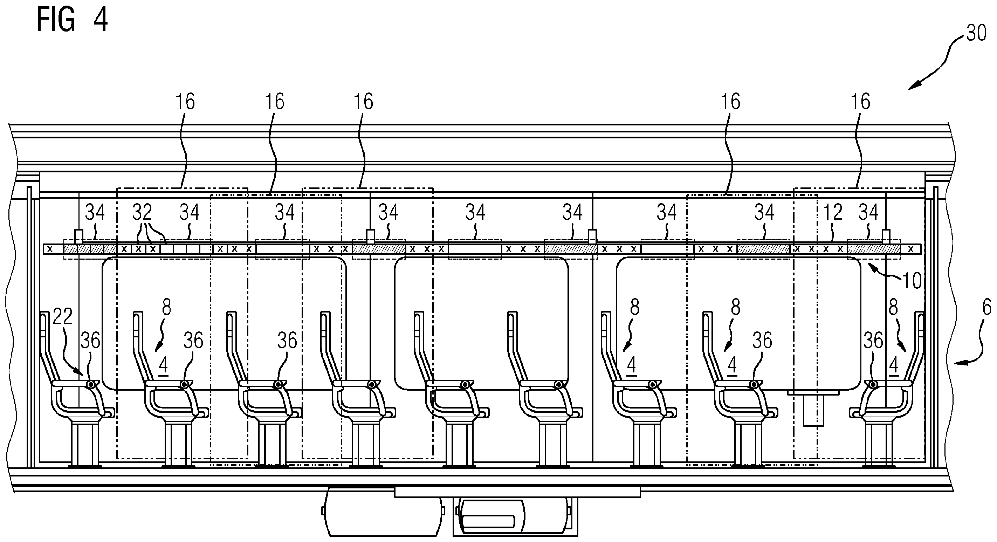

FIG 3 zeigt einen Querschnitt durch ein anderes, ebenfalls als Schienenfahrzeug 30 ausgebildetes Passagierverkehrsmittel. FIG 4 zeigt einen Längsschnitt durch das Schienenfahrzeug 30 aus FIG 3.

Die Erfindung kann jedoch auch in einem anders ausgebildeten Passagierverkehrsmittel verwendet werden.

Die nachfolgende Beschreibung beschränkt sich im Wesentlichen auf die Unterschiede zum Ausführungsbeispiel aus FIG 1 und FIG 2, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Das Schienenfahrzeug 30 umfasst - anstatt der mehreren Lichtbänder - ein einziges Lichtband 10, das dazu eingerichtet ist, die Sitzplätze 4 der Sitzreihe 6 zu beleuchten. Das Lichtband 10 erstreckt sich - wie die Sitzreihe 6 - in Längsrichtung des Schienenfahrzeugs 30.

Das Lichtband 10 weist als Lichtquellen 32 beispielsweise LCD-Displayelemente auf. Die Lichtquellen 32 können prinzipiell auch anders ausgebildet sein.

Die als LCD-Displayelemente ausgebildete Lichtquellen 32 sind nur im zeichnungsgemäßen linken Bereich der FIG 4 eingezeichnet.

In einer Fahrzeugsteuerung des Schienenfahrzeugs 30 (nicht dargestellt) ist jeder Position eines jeweiligen Sitzes 8 jeweils ein Abschnitt 34 des Lichtbands 10 zugeordnet. In diesem Beispiel ist jeweils den zwei nebeneinander angeordneten Sitzen 8 (insbesondere ihrer Position) jeweils ein gemeinsamer Abschnitt 34 des Lichtbands 10 zugeordnet.

Bei einer Änderung des Sitzlayouts kann die Zuordnung mittels Umprogrammierung der Fahrzeugsteuerung geändert werden, diese Anordnung liegt jedoch außerhalb der Erfindung.

Nicht zugeordnete Abschnitte sind in FIG 4 durch ein oder mehrere Kreuz(e) (x) gekennzeichnet.

Das Schienenfahrzeug 30 umfasst ein Auswahl-Schalt-Mittel 22 (siehe FIG 3).

In diesem Ausführungsbeispiel weist das Auswahl-Schalt-Mittel 22 mehrere manuell betätigbare Schalter 36 auf.

Jedem Sitzplatz 4 ist ein manuell betätigbarer Schalter 36 zugeordnet. Vorzugsweise ist der Schalter 36 in dem jeweiligen Sitzplatzbereich 16 angeordnet.

In diesem Beispiel überlappen die Sitzplatzbereiche 16 nebeneinander angeordneter Sitze 8. In jedem der überlappenden Bereiche 16 ist ein Schalter 36 angeordnet. Auf diese Weise teilen sich jeweils zwei nebeneinander angeordnete Sitze 8 einen Schalter 36.

Prinzipiell sind jedoch auch andere Ausgestaltungen denkbar. Beispielsweise könnte für jeden Sitz 8 ein eigener Schalter 36 vorgesehen sein (nicht gezeigt).

Der dem jeweiligen Sitz 8 (bzw. seiner Position) zugeordnete Abschnitt 34 des Lichtbands 10 wird mittels manueller Betätigung des in dem jeweiligen Sitzbereich 16 angeordneten Schalters 36 ausgewählt. Bei der Auswahl wird der Schaltzustand zumindest eines Teils der Lichtquellen 32 in dem ausgewählten Abschnitt 34, hier aller Lichtquellen 32 in dem ausgewählten Abschnitt 34, verändert.

In FIG 3 und FIG 4 wurde davon ausgegangen, dass ursprünglich alle Lichtquellen 32 der Lichtbänder 10 ausgeschaltet waren (z. B. bei Inbetriebnahme des Schienenfahrzeugs 30).

In mehreren Sitzplatzbereichen 16 wurden dann - auf die oben genannte Art und Weise, d. h. mittels manueller Betätigung der entsprechenden Schalter 36, - Abschnitte 34 der Lichtbänder 10 ausgewählt und die in den Abschnitten 34 angeordneten Lichtquellen 32 bei der Auswahl eingeschaltet.

Eingeschaltete Lichtquellen 32 sind schraffiert dargestellt. Ausgeschaltete Lichtquellen 32 in den jeweils einem Sitz 8 (bzw. seiner Position) zugeordneten Abschnitten 34 sind als leere Rechtecke, d. h. als Rechtecke ohne Schraffur, dargestellt.

Auf diese Weise kann eine individuelle Sitzplatzbeleuchtung erreicht werden.

Obwohl die Erfindung im Detail durch das bevorzugte Ausführungsbeispiel näher illustriert und beschrieben wurde, sc ist die Erfindung nicht durch die offenbarten Beispiele eingeschränkt und andere Variationen können vom Fachmann hieraus abgeleitet werden, ohne den Schutzumfang der Erfindung im Rahmen der Ansprüche zu verlassen.

## Patentansprüche

1. Verfahren zur individuellen Sitzplatzbeleuchtung, wobei ein Lichtband (10) eines Passagierverkehrsmittels (2, 30) dazu eingerichtet ist, in einer Sitzreihe (6) angeordnete Sitzplätze (4) des Passagierverkehrsmittels (2, 30) zu beleuchten,
bei dem
in einem Bereich (16) eines der Sitzplätze (4)
ein Abschnitt (24, 34) des Lichtbands (10) ausgewählt wird und das Lichtband dazu eingerichtet ist, dass der Schaltzustand von zumindest einem Teil derjenigen Lichtquellen (14, 32) des Lichtbands (10), die in dem ausgewählten Abschnitt (24, 34) angeordnet sind, verändert werden kann,
wobei
der Abschnitt (24, 34) des Lichtbands (10) unter Verwendung zumindest eines Sensors (26) ausgewählt wird,
**dadurch gekennzeichnet, dass** der zumindest eine Sensor (26) ein Bewegungssensor (26) ist, der erkennt, wenn sich ein Körperteil eines Benutzers dem Lichtband (10) nähert, wobei derjenige Abschnitt (24), in dem sich das Körperteil dem Lichtband (10) auf vorgegebene Weise nähert, ausgewählt wird.

2. Verfahren nach Anspruch 1,
**dadurch gekennzeichnet, dass**
der Schaltzustand durch manuelle Einwirkung in diesem Sitzplatzbereich (16) verändert wird.

3. Verfahren nach Anspruch 1 oder 2,
**dadurch gekennzeichnet, dass**
der Schaltzustand zumindest eines Teils der Lichtquellen (14, 32) in dem ausgewählten Abschnitt (24, 34) des Lichtbands (10) bei der Auswahl des Abschnitts (24, 34) verändert wird.

4. Verfahren nach einem der Ansprüche 1 bis 3,
**dadurch gekennzeichnet, dass**
mittels des Bewegungssensors (26) jeder Position eines jeweiligen Sitzes (8) ein Abschnitt (24, 34) des Lichtbands zugeordnet ist.

5. Passagierverkehrsmittel (2, 30) umfassend zumindest ein Lichtband (10) und in einer Sitzreihe (6) angeordnete Sitzplätze (4), wobei das Lichtband (10) dazu eingerichtet ist, die Sitzplätze (4) zu beleuchten, umfassend ein Auswahl-Schalt-Mittel (22), welches zumindest einen Sensor aufweist und dazu eingerichtet ist, in einem Bereich (16) eines der Sitzplätze (4) einen Abschnitt (24, 34) des Lichtbands (10) auszuwählen und den Schaltzustand von zumindest einem Teil derjenigen Lichtquellen (14, 32) des Lichtbands (10), die in dem ausgewählten Abschnitt (24, 34) angeordnet sind, zu verändern, wobei der Abschnitt (24, 34) des Lichtbands (10) unter Verwendung des zumindest einen Sensors (26) auswählbar ist, **dadurch gekennzeichnet, dass** der zumindest eine Sensor (26) ein Bewegungssensor (26) ist, der dazu eingerichtet ist zu erkennen, wenn sich ein Körperteil eines Benutzers dem Lichtband (10) nähert, wobei derjenige Abschnitt (24), in dem sich das Körperteil dem Lichtband (10) auf vorgegebene Weise nähert, auswählbar ist.

6. Passagierverkehrsmittel (2, 30) nach Anspruch 5,
**dadurch gekennzeichnet, dass**
das Auswahl-Schalt-Mittel (22) dazu eingerichtet ist, durch manuelle Einwirkung in dem ausgewählten Abschnitt des Sitzplatzbereichs (16) den Schaltzustand zumindest eines Teils der Lichtquellen (14, 32) in dem ausgewählten Abschnitt (24, 34) zu verändern.

7. Passagierverkehrsmittel (2) nach Anspruch 5 oder 6,
**dadurch gekennzeichnet, dass**
das Auswahl-Schalt-Mittel (22) mehrere Bewegungssensoren (26) aufweist, die dazu eingerichtet sind, zu erkennen, wenn sich ein Körperteil eines Benutzers dem Lichtband (10) nähert, wobei der Abschnitt (24), in dem sich das Körperteil dem Lichtband (10) auf vorgegebene Weise nähert, ausgewählt wird.

8. Passagierverkehrsmittel (2, 30) nach einem der Ansprüche 5 bis 7, **dadurch gekennzeichnet, dass** das Lichtband (10) oberhalb der Sitzplätze (4) angeordnet ist.

9. Passagierverkehrsmittel (2, 30) nach einem der Ansprüche 5 bis 8, **dadurch gekennzeichnet, dass** das Lichtband (10) als Lichtquellen (14, 32) LEDs, OLEDs, LCD-Displayelemente und/oder elektroluminiszierende Beschichtungselemente aufweist.

## Claims

1. Method for individually illuminating a seat, wherein a light band (10) of a passenger transportation means (2, 30) is designed to illuminate seats (4) of the passenger transportation means (2, 30) arranged in a row of seats (6),
in which
in a region (16) of one of the seats (4)
a section (24, 34) of the light band (10) is selected and the light band is designed to this end so that the switching state of at least one part of those light sources (14, 32) of the light band (10) arranged in the selected section (24, 34) can be changed,
wherein
the section (24, 34) of the light band (10) is selected using at least one sensor (26),
**characterised in that** the at least one sensor (26) is a motion sensor (26), which identifies when a body part of a user is approaching the light band (10), wherein that section (24), in which the body part is approaching the light band (10) in a predetermined manner, is selected.

2. Method according to claim 1,
**characterised in that**
the switching state is changed by manual operation in this seating area (16).

3. Method according to claim 1 or 2,
**characterised in that**
the switching state of at least one part of the light sources (14, 32) in the selected section (24, 34) of the light band (10) is changed when the section (24, 34) is selected.

4. Method according to one of claims 1 to 3,
**characterised in that**
the motion sensor (26) is used to assign a section (24, 34) of the light band to each position of a respective seat (8).

5. Passenger transportation means (2, 30) comprising at least one light band (10) and seats (4) arranged in a row of seats (6), wherein the light band (10) is designed to illuminate the seats (4), comprising a selection switching means (22) which has at least one sensor and is designed to select a section (24, 34) of the light band (10) in a region (16) of one of the seats (4), and to change the switching state of at least one part of those light sources (14, 32) of the light band (10) which are arranged in the selected section (24, 34), wherein the section (24, 34) of the light band (10) can be selected using the at least one sensor (26), **characterised in that** the at least one sensor (26) is a motion sensor (26), which is designed to identify when a body part of a user is approaching the light band (10), wherein that section (24), in which the body part is approaching the light band (10) in a predetermined manner, can be selected.

6. Passenger transportation means (2, 30) according to claim 5, **characterised in that** the selection switching means (22) is designed to change the switching state of at least one part of the light sources (14, 32) in the selected section (24, 34) by manual operation in the selected section of the seating area (16).

7. Passenger transportation means (2) according to claim 5 or 6, **characterised in that** the selection switching means (22) has multiple motion sensors (26) which are designed to identify when a body part of a user is approaching the light band (10), wherein the section (24), in which the body part is approaching the light band (10) in a predetermined manner, is selected.

8. Passenger transportation means (2, 30) according to one of claims 5 to 7, **characterised in that** the light band (10) is arranged above the seats (4).

9. Passenger transportation means (2, 30) according to one of claims 5 to 8, **characterised in that** the light band (10) has LEDs, OLEDs, LCD display elements and/or
electroluminescent coating elements as light sources (14, 32).

## Revendications

1. Procédé d'éclairage individuel de places assises, dans lequel une bande (10) lumineuse d'un moyen (2, 30) de transport de passagers est agencée pour éclairer des places (4) assises disposées suivant une rangée (6) de sièges du moyen (2, 30) de transport de passagers,
dans lequel, dans une zone (16) de l'une des places (4) assises, on sélectionne un tronçon (24, 34) de la bande (10) lumineuse, et la bande lumineuse est agencée de manière à pouvoir modifier l'état de commutation d'au moins une partie des sources (14, 32) lumineuses de la bande (10) lumineuse, qui sont disposées dans le tronçon (24, 34) sélectionné,
dans lequel on choisit le tronçon (24, 34) de la bande (10) lumineuse en utilisant au moins un capteur (26),
**caractérisé en ce que** le au moins un capteur (26) est un capteur (26) de déplacement, qui reconnaît si une partie du corps d'un utilisateur se rapproche de la bande (10) lumineuse, dans lequel on choisit le tronçon (24), dans lequel la partie du corps se rapproche d'une façon donnée à l'avance de la bande (10) lumineuse.

2. Procédé suivant la revendication 1,
**caractérisé en ce que**
l'on modifie l'état de commutation par action manuelle dans cette zone (16) de places assises.

3. Procédé suivant la revendication 1 ou 2,
**caractérisé en ce que**
l'on modifie, lors de la sélection du tronçon (24, 34), l'état de commutation d'au moins une partie des sources (14, 32) lumineuses dans le tronçon (24, 34) sélectionné de la bande (10) lumineuse.

4. Procédé suivant l'une des revendications 1 à 3,
**caractérisé en ce que**,
au moyen du capteur (26) de déplacement, on associe un tronçon (24, 34) de la bande lumineuse à chaque position d'un siège (8) respectif.

5. Moyen (2, 30) de transport de passagers comprenant au moins une bande (10) lumineuse et des places (4) assises disposées en une rangée (6) de sièges, dans lequel la bande (10) lumineuse est agencée pour éclairer les places (4) assises,
comprenant un moyen (22) de commutation de sélection, qui a au moins un capteur et est agencé pour sélectionner, dans une zone (16) de l'une des places (4) assises, un tronçon (24, 34) de la bande (10) lumineuse et modifier l'état de commutation d'au moins une partie des sources (14, 32) lumineuses de la bande (10) lumineuse, qui sont disposées dans le tronçon (24, 34) sélectionné, dans lequel le tronçon (24, 34) de la bande (10) lumineuse peut être sélectionné en utilisant le au moins un capteur (26), **caractérisé en ce que** le au moins un capteur (26) est un capteur (26) de déplacement, qui est agencé pour reconnaître si une partie du corps d'un utilisateur se rapproche de la bande (10) lumineuse, dans lequel le tronçon (24), dans lequel la partie du corps se rapproche d'une façon donnée à l'avance de la bande (10) lumineuse, peut être sélectionné.

6. Moyen (2, 30) de transport de passagers suivant la revendication 5,
**caractérisé en ce que**
le moyen (22) de commutation de sélection est agencé pour modifier, dans le tronçon (24, 34) sélectionné, par action manuelle dans le tronçon sélectionné de la zone (16) de places assises, l'état de commutation d'au moins une partie des sources (14, 32) lumineuses.

7. Moyen (2) de transport de passagers suivant la revendication 5 ou 6,
**caractérisé en ce que**
le moyen (22) de commutation de sélection a plusieurs capteurs (26) de déplacement, qui sont agencés pour reconnaître si une partie du corps d'un utilisateur se rapproche de la bande (10) lumineuse, dans lequel le tronçon (24), dans lequel la partie du corps se rapproche d'une façon donnée à l'avance de la bande (10) lumineuse, est sélectionné.

8. Moyen (2, 30) de transport de passagers suivant l'une des revendications 5 à 7,
**caractérisé**
**en ce que** la bande (10) lumineuse est disposée au-dessus des places (4) assises.

9. Moyen (2, 30) de transport de passagers suivant l'une des revendications 5 à 8,
**caractérisé**
**en ce que** la bande (10) lumineuse a, comme sources (14, 32) lumineuses, des LED, des OLED, des éléments d'affichage LCD et/ou des éléments de revêtement électroluminescents.
